# FASCICULE DE BREVET EUROPEEN

(11) **EP 3 098 474 B1**
(45) Date de publication et mention de la délivrance du brevet: **12.09.2018**
(21) Numéro de dépôt: 16171587.5
(22) Date de dépôt: 26.05.2016
(51) Int. Cl.: B62K 25/04, F16F 9/36, F16F 9/346, F16F 9/32, F16F 9/02, B62K 25/08

(54) **SYSTÈME DE SUSPENSION PNEUMATIQUE**
LUFTFEDERUNGSSYSTEM
PNEUMATIC SUSPENSION SYSTEM

(30) Priorité: 26.05.2015 FR 1554717
(43) Date de publication de la demande: 30.11.2016
(73) Titulaire: Bossard, Olivier, 31240 Saint Jean (FR)
(72) Inventeur: Bossard, Olivier, 31240 Saint Jean (FR)
(74) Mandataire: Ipside

(56) Documents cités:
- DE-A1- 3 042 536
- DE-A1- 19 938 084
- US-A- 4 240 619
- US-A- 5 848 677
- US-A1- 2002 157 910

## Description

### DOMAINE TECHNIQUE

La présente invention relève du domaine des équipements de véhicules.

Elle concerne plus particulièrement une partie de suspension remplaçant un ressort hélicoïdal, typiquement mais non exclusivement pour deux roues de type moto ou vélo.

### ÉTAT DE LA TECHNIQUE

On connaît, dans ce domaine, divers dispositifs de suspension, utilisant par exemple un ressort et un amortisseur hydraulique coaxiaux. De tels dispositifs sont par exemple décrits dans le brevet FR 2 897 915 (« système d'amortissement à détente rapide monté en jambe de force ») du même demandeur. De façon connue, un amortisseur comprend un corps de forme tubulaire dont les extrémités sont obturées par des parois, et dans lequel peut se translater un piston prolongé par une tige traversant l'une des parois d'extrémités, ledit piston délimitant deux chambres. Dans le cas d'amortisseur hydraulique, il est communément prévu des alésages entre les deux chambres pour permettre au fluide de passer de l'une à l'autre selon des lois prédéterminées. En complément, des moyens sont éventuellement prévus pour compenser la variation de volume de la tige.

De tels amortisseurs sont usuellement associés à des systèmes de suspension, de type ressort hélicoïdal, qui créent une fonction de déplacement élastique de la suspension.

On connait déjà dans ce domaine un document DE19938084 relatif à une douille de guidage d'une tige de piston logée dans un cylindre et adaptée pour recevoir une tige de piston.

On connait de même un document DE3042536 décrivant un système de suspension comprenant un corps cylindrique dans lequel est agencé en coulissement un piston fixé à une tige de piston. Le document US 4,240,619 est considéré comme étant l'état de l'art le plus proche, et comprends toutes les caractéristiques du préambule de la revendication 1.

### EXPOSÉ DE L'INVENTION

La présente invention vise sous un premier aspect un système de suspension comprenant un corps pourvu d'une cavité cylindrique dans laquelle est monté en coulissement un piston divisant la cavité cylindrique en deux chambres de travail recevant chacune un gaz, le piston étant relié à une tige de piston sortant de la cavité cylindrique au travers d'une bague d'étanchéité.

Le système de suspension comporte des moyens de ménager un jeu angulaire d'amplitude prédéterminée de l'axe de la tige de piston relativement à l'axe de la cavité cylindrique.

On comprend qu'il s'agit ici d'un jeu angulaire de la tige de piston autour de la position dudit piston dans la cavité cylindrique. L'axe de la tige de piston n'est alors plus confondu avec celui de la cavité cylindrique. Cette disposition permet d'accommoder des déformations géométriques axiales entre la cavité cylindrique et l'axe de la tige de piston sans gêner le fonctionnement normal en translation du piston dans la cavité cylindrique, ce que ne permettent pas les dispositifs décrits dans les arts antérieurs.

Dans un mode particulier de réalisation, les moyens de ménager un jeu angulaire de l'axe de la tige de piston relativement à l'axe de la cavité cylindrique comprennent, au niveau du piston, une bague épaisse prenant appui sur la face interne de la cavité cylindrique, ladite bague épaisse comportant un alésage central dans lequel vient prendre place une pièce d'extrémité de la tige de piston, ladite bague épaisse étant pincée entre cette pièce d'extrémité et une rondelle plate maintenue en place par une vis, un jeu latéral d'amplitude prédéterminé étant ménagé entre le diamètre interne de la bague épaisse et le diamètre externe de la pièce d'extrémité, un joint torique étant conjointement pincé entre les faces transversales de la pièces d'extrémité et de la bague épaisse.

Il résulte de ces caractéristiques la création d'un jeu latéral entre le piston et la tige du piston, de sorte que les défauts d'alignement de la tige du piston ne perturbent pas le coulissement du piston dans la cavité cylindrique.

Il y a lieu de noter que le jeu angulaire créé permet à la tige du piston de pouvoir réaliser uniquement un débattement angulaire, autour de l'axe longitudinal Z, de sorte à corriger les défauts d'alignement de la tige du piston et de la cavité cylindrique.

En outre, le débattement angulaire de la tige du piston ne modifie pas les caractéristiques mécaniques du système de suspension, dans la mesure où les deux chambres de travail sont étanches, le mouvement du piston dans le corps cylindrique provoquant une compression dans l'une des deux chambres de travail et simultanément une détente dans l'autre chambre de travail. La tige de piston peut donc fonctionner dans cette position présentant un désaxement vis-à-vis de la cavité cylindrique, sans que soit créé un effort de rappel de la tige vers l'axe de la cavité cylindrique. Le système permet un montage non hyperstatique de la suspension.

Par ailleurs, le système tel que décrit maintient une étanchéité entre les chambres remplie de gaz, malgré le jeu angulaire créé.

Dans un mode de réalisation, les moyens de ménager un jeu angulaire de l'axe de la tige de piston relativement à l'axe de la cavité cylindrique comprennent, au niveau de la bague d'étanchéité, une bague externe comportant une partie sensiblement tubulaire solidarisée à une partie formant rondelle interne perpendiculaire à l'axe longitudinal Z, en sa partie centrale, la partie tubulaire venant se fixer à l'intérieur de l'extrémité du corps cylindrique, la partie formant rondelle interne étant pincée entre une coupelle solidarisée à la tige de piston, et un écrou qui vient se visser sur un prolongement tubulaire partiellement fileté de ladite coupelle, les diamètres externes de la coupelle et de son prolongement tubulaire, étant inférieurs d'un jeu prédéterminé aux diamètres internes de la partie sensiblement tubulaire et de la partie formant rondelle interne respectivement, un joint torique étant inséré entre une face transversale de la coupelle et la face correspondante de la partie formant rondelle interne de la bague externe.

L'invention vise également une fourche de suspension de moto, caractérisé en ce qu'elle comporte au moins un système de suspension tel qu'exposé.

L'invention vise encore un véhicule disposant de systèmes de suspension tels qu'exposé plus haut.

### PRÉSENTATION DES FIGURES

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
- Figure 1 : un schéma de principe des éléments impliqués dans le dispositif,
- Figure 2a : une vue en coupe des deux tubes internes du dispositif,
- Figure 2b : une vue de côté des deux tubes internes du dispositif,
- Figures 2c et 2d : des vues de détail de la vue en coupe de la figure 2a
- Figure 3a : une vue en coupe de l'ensemble des tubes formant la suspension,
- Figure 3b : une vue de côté de l'ensemble des tubes formant la suspension,
- Figures 3c et 3d : des vues de détail de la vue de la figure 3a.

### DESCRIPTION DÉTAILLÉE D'UN MODE DE RÉALISATION DE L'INVENTION

L'invention trouve sa place dans le cadre d'une suspension de véhicule. L'exemple décrit dans la suite est celui d'une fourche de suspension de moto. Bien entendu, le système de suspension selon l'invention peut être adapté à tout type de véhicule (automobile, moto, vélo,...) ou tout autre dispositif. Cette fourche de suspension comporte par exemple un système d'amortissement classique et un système de suspension pneumatique, décrit ci-après.

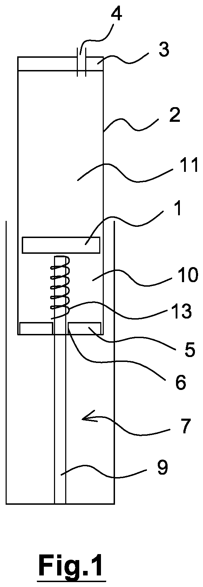

Comme on le voit sur la figure 1, qui illustre de façon très schématique les éléments composant ce système de suspension, celui-ci est agencé selon un axe longitudinal principal Z. On comprend que le système de suspension est destiné à être fixé par une des extrémités à une partie non suspendue de ce véhicule (non illustrée sur les figures), par exemple la roue, et par son autre extrémité à une partie suspendue (également non figurée) du véhicule par exemple le châssis. Dans le présent exemple de réalisation, les extrémités supérieure et inférieure du système de suspension sont indifféremment fixées à la roue ou au châssis.

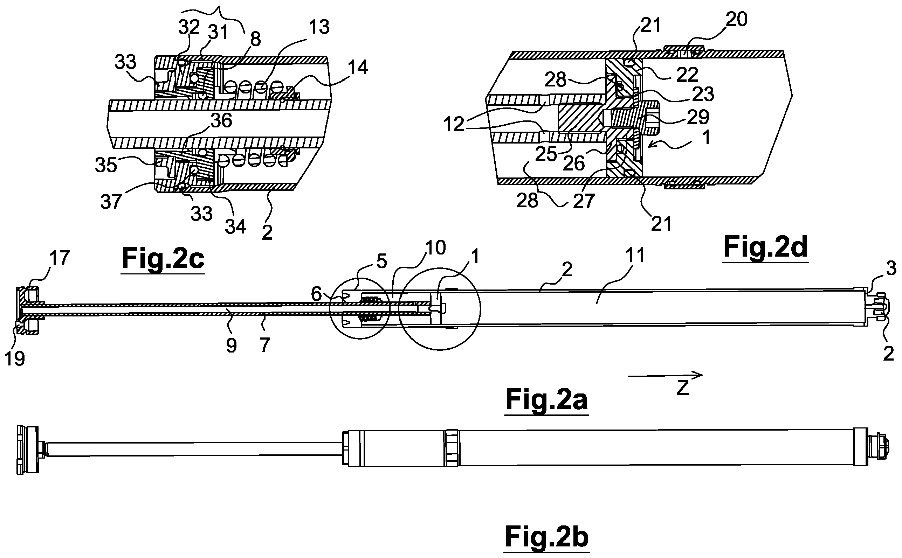

Ainsi que représenté sur les figures 2a à 2d, le système de suspension comporte en premier lieu un piston 1, mobile en translation selon l'axe longitudinal Z au sein d'un corps cylindrique 2. Le corps cylindrique 2 est fermé en ses deux extrémités. Il est fermé en son extrémité supérieure destinée à être solidarisée par exemple au châssis du véhicule (en haut sur la figure 1), par un bouchon supérieur 3 doté d'une valve supérieure 4. Le corps cylindrique 2 est fermé, d'autre part, en son extrémité inférieure (en bas du tube sur la figure 1), par un bouchon intermédiaire 5 formant bague d'étanchéité et présentant un alésage traversant 6, préférentiellement concentrique au corps cylindrique 2, ledit bouchon intermédiaire 5 étant de dimensions adaptées au passage d'une tige de piston 7 rigide, liée au piston 1 en son extrémité supérieure, ladite tige de piston 7 étant engagée en glissement dans ledit alésage traversant 6, un élément d'étanchéité tel qu'un joint torique 8 assurant l'étanchéité autour de la tige 7 au niveau de l'alésage 6 du bouchon intermédiaire 5. Les bouchons supérieur 3 et intermédiaire 5 sont fixés au tube cylindrique 2 par des méthodes connues de l'homme de l'art, par exemple par vissage. Tout autre mode de fixation est cependant utilisable, et l'un au moins de ces bouchons 3, 5 peut être formé en tant que partie intégrante du corps cylindrique 2. Dans le présent exemple de réalisation, la tige de piston 7 est creuse en ce qu'elle comporte un alésage axial (c'est à dire selon l'axe longitudinal du système de suspension) 9.

La position du piston 1 au sein du corps cylindrique 2 détermine de ce fait deux chambres de travail, une chambre inférieure 10, dans laquelle transite notamment la tige de piston 7, et une chambre supérieure 11, accessible depuis la valve supérieure 4. Dans la présente invention, les chambres inférieure 10 et supérieure 11, sont remplies de gaz, par exemple de l'air ou de l'azote ou tout autre gaz. On comprend que, de la sorte, le mouvement du piston 1 dans le corps cylindrique 2 provoque une compression dans l'une des deux chambres de travail 8, 9, et simultanément une détente dans l'autre chambre de travail, selon le sens de déplacement dudit piston 1 au sein du corps cylindrique 2.

La tige de piston 7 comporte, dans le présent exemple non limitatif, deux lumières traversantes 12, perpendiculaires à l'axe longitudinal, et adaptées à mettre en relation la cavité formée par l'alésage axial 9 de la tige de piston 7 et la chambre inférieure 10.

Un ressort 13 est inséré dans la chambre inférieure 10. Ce ressort 13, de type spiral, prend place autour de la tige de piston 7. Il vient prendre appui, d'une part, sur la face interne (c'est à dire la face tournée vers l'intérieur du tube cylindrique 2) du bouchon intermédiaire 5, et, d'autre part, sur une coupelle 14 solidarisée à la tige de piston 7.

L'effet de ce ressort 7 est de tendre à repousser le piston 1 vers la chambre supérieure 11 lorsque le piston 1 arrive en fin de course au sein du corps cylindrique 2, c'est à dire au voisinage du bouchon intermédiaire 5.

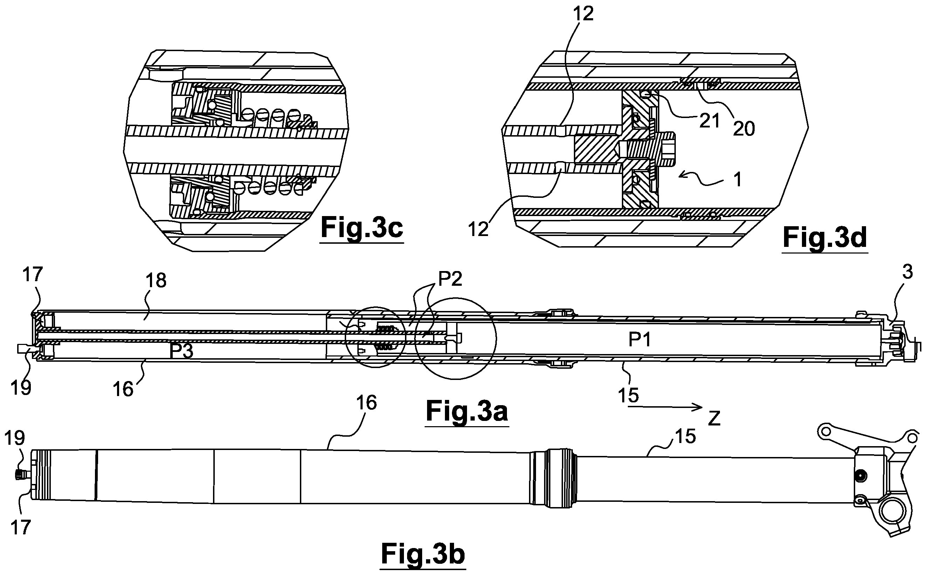

En figures 3a à 3d est représentée une forme de réalisation d'un système de suspension monté en jambe de force entre une partie non suspendue d'un véhicule, et une partie suspendue du véhicule.

Selon la forme de réalisation des figures 3a à 3d, l'agencement de jambe de force comporte un tube interne 15 et un tube externe 16 montés en coulissement l'un dans l'autre. Le tube interne 15 de jambe de force est fixé au corps cylindrique 2 au niveau du bouchon supérieur 3. Le corps cylindrique 2 est donc ici inséré dans le tube interne 15 auquel il est coaxial. Le tube externe 16 est monté en coulissement autour du tube interne 15 et est fixé à la tige de piston 7 au niveau d'un bouchon inférieur 17 recevant l'extrémité de cette tige de piston 7.

On comprend que, grâce à cet arrangement, une troisième chambre 18 est déterminée entre le bouchon intermédiaire 5, la tige de piston 7, le bouchon inférieur 17 et la surface interne du tube externe 16. Cette chambre est accessible par l'intermédiaire d'une valve inférieure 19, traversant le bouchon inférieur 17. Dans le présent exemple de réalisation, cette troisième chambre 18 est remplie de gaz.

Selon la pression de gaz choisie par l'utilisateur pour cette troisième chambre 18, le piston 1 se trouve plus ou moins engagé au sein du corps cylindrique 2, et vient donc pressuriser plus ou moins le gaz inséré dans les chambres inférieure 10 et supérieure 11.

Comme on le voit sur la figure 2d, dans le présent exemple de réalisation, le piston 1 est conformé sous forme d'une bague épaisse 22 comportant un alésage central traversant, de diamètre voisin du diamètre de la tige de piston 7.

La bague épaisse 22 comporte en sa face externe un logement pour un joint torique 21, lequel vient créer l'étanchéité entre la chambre inférieure 10 et la chambre supérieure 11 au niveau de ladite face externe du piston 1. La bague épaisse 22 comporte encore un creusement supérieur cylindrique de faible profondeur (ici environ 1 à 2 mm pour un diamètre de cavité interne de quatre centimètres environ) au centre de sa face supérieure (faisant face à la chambre supérieure), destiné à accueillir une rondelle plate 23 de type connu, de diamètre inférieur à celui dudit creusement supérieur, la différence de diamètre étant, par exemple de 1 à 2 mm. La bague épaisse 22 comporte également un creusement inférieur cylindrique de faible profondeur (ici environ 1 à 2 mm pour un diamètre de cavité interne de quatre centimètres environ) en sa face inférieure (faisant face à la chambre inférieure), destiné à accueillir une pièce d'extrémité 24 fixée au bout de la tige de piston 7. Ladite tige de piston 7 est taraudée en son extrémité faisant face au piston.

La pièce d'extrémité 24 comporte, tel que visible de gauche à droite sur la figure 2d,
- d'abord une partie filetée 25 formant vis, de forme complémentaire du taraudage de la tige de piston 7,
- puis une partie sous forme de disque plan 26, adaptée à prendre place dans le creusement inférieur de la bague épaisse 22, et de diamètre légèrement inférieur à celui du creusement inférieur, la différence de diamètre étant, par exemple, de 1 à 2 mm,
- puis une partie cylindrique taraudée 27 de diamètre externe inférieur au diamètre de l'alésage central de la bague épaisse 22, et comportant un alésage central taraudé.

La bague épaisse 22 comporte enfin, sur la surface de son creusement inférieur, un logement sous forme de rainure circulaire, adapté à recevoir un joint torique 28. Ce joint torique 28, par exemple réalisé en matériau déformable à température ambiante de type caoutchouc, est destiné notamment à assurer une étanchéité entre la bague épaisse 22 et la pièce d'extrémité 24.

La pièce d'extrémité 24 de la tige de piston 7 est alors solidarisée en translation à la bague épaisse 22 par l'intermédiaire d'une vis **29** assemblée dans la partie cylindrique taraudée 27 de ladite pièce d'extrémité 24, et qui vient presser la rondelle 23 dans le creusement supérieur de ladite bague épaisse 22.

Du fait des jeux volontairement déterminés entre la bague épaisse 22 et les pièces qui y trouvent logement, et de la présence d'un joint torique 28 entre la bague épaisse et la partie sous forme de disque plan 26 de la pièce d'extrémité 24, il est créé un jeu latéral non nul, par exemple de un demi à deux millimètres, entre la pièce d'extrémité 24 et la bague épaisse 22. En effet, la bague épaisse 22 prend appui sur le joint torique 28 qui lui même prend appui sur la partie sous forme de disque plan 26 de la pièce d'extrémité 24.

On a donc créé un jeu latéral entre le piston 1 et la tige de piston 7, qui a pour effet de permettre un débattement angulaire modéré de la tige de piston 7 autour de l'axe longitudinal.

De même, comme on le voit sur la figure 2c, dans le présent exemple de réalisation, le bouchon intermédiaire 5 comprend en premier lieu une bague externe **30.**

La bague externe 30 comporte une partie sensiblement tubulaire **31** solidarisée à une partie formant rondelle interne **32** perpendiculaire à l'axe longitudinal Z, en sa partie centrale. La partie tubulaire 31 vient se fixer à l'intérieur de l'extrémité du corps cylindrique 2 par vissage. Un joint d'étanchéité torique **33** est prévu entre la bague externe 30 et le corps cylindrique 2.

Le bouchon intermédiaire 5 comprend en second lieu une coupelle **34** et en troisième lieu un écrou **35.**

La partie formant rondelle interne 32 est pincée entre la coupelle 34 solidarisée à la tige de piston 7, et l'écrou 35 qui vient se visser sur un prolongement tubulaire **36** partiellement fileté de ladite coupelle 34.

Les diamètres externes de la coupelle 34 et de son prolongement tubulaire 36, sont inférieurs d'un jeu prédéterminé aux diamètres internes de la partie sensiblement tubulaire 31 et de la partie formant rondelle interne respectivement.

Un joint torique **37** est inséré entre une face transversale (c'est à dire perpendiculaire à l'axe longitudinal Z) de la coupelle 34 et la face correspondante de la partie formant rondelle interne 32 de la bague externe 30. On comprend que, de ce fait, la face transversale de la coupelle 34 prend appui sur le joint torique 37 qui vient lui même prendre appui sur la partie formant rondelle 32 de la bague externe 30.

Ce joint torique 37 est ici réalisé en matériau déformable à température ambiante de type caoutchouc.

De la sorte, un jeu latéral est ménagé entre la coupelle 34 et la bague externe 30, qui a encore pour effet de permettre un débattement angulaire modéré de la tige de piston 7 autour de l'axe longitudinal Z.

Les matériaux et dimensions des divers éléments cités plus haut sont à la portée de l'homme du métier et ne sont donc pas détaillés plus avant ici.

Vis-à-vis de l'art antérieur, dans le document DE19938084 (cité plus haut), la douille de guidage comprend des éléments de guidage en translation de la tige du piston. Ces éléments de guidage sont maintenus avec un jeu latéral et axial dans un logement annulaire fixé au cylindre, par des rondelles à denture intérieure de sorte que ces éléments de guidage soient flottants dans le cylindre. Le document DE19938084 ne décrit pas, ni ne suggère, un système de suspension dans lequel un jeu latéral angulaire est créé entre le piston et la tige du piston. Par ailleurs DE19938084 divulgue une douille de guidage comprenant des éléments de guidage de la tige de piston maintenus par des rondelles à denture intérieure dans un logement annulaire avec un jeu latéral et axial. Comme on peut le voir sur les figures, une fente est formée entre les éléments de guidage et le logement annulaire afin de ménager ce jeu axial et latéral. Dès lors, la chambre de travail en regard de la douille de guidage ne peut être étanche au gaz. En outre, le jeu axial prévu par DE19938084 est un facteur de modification du volume respectif des chambres de travail et complexifie le réglage des pressions initiales respectives des chambres.

Dans le document DE3042536 (également cité plus haut), le corps cylindrique comprend une douille de guidage de la tige de piston, dont une partie comporte une gorge dans laquelle sont logés des éléments d'étanchéité recevant la tige de piston, et dont une autre partie comprend un alésage recevant également la tige de piston. Comme représenté sur la figure 1 de DE3042536, la tige de piston ne présente pas de possibilité de débattement angulaire au sein de cet alésage.

## Revendications

1. Système de suspension comprenant un corps (15) pourvu d'une cavité cylindrique (2) dans laquelle est monté en coulissement, selon un axe longitudinal Z, un piston (1) divisant la cavité cylindrique en deux chambres de travail : une chambre inférieure (10) et une chambre supérieure (11) recevant chacune un gaz, le piston (1) étant relié à une tige de piston (7) sortant de la cavité cylindrique (2) au travers d'une bague d'étanchéité (5), le système de suspension comportant des moyens de ménager un jeu angulaire d'amplitude prédéterminée de l'axe de la tige de piston (7) relativement à l'axe de la cavité cylindrique (2), lesdits moyens comprenant :
- au niveau du piston (1) une bague épaisse (22) prenant appui sur la face interne de la cavité cylindrique (2) et comportant un alésage traversant dans lequel vient prendre place une pièce d'extrémité (24) fixée au bout de la tige du piston (7), un jeu latéral d'amplitude prédéterminé étant ménagé entre le diamètre interne de la bague épaisse (22) et le diamètre externe de la pièce d'extrémité (24), le système de suspension étant **caractérisé en ce que** lesdits moyens comprennent :
- un joint torique (28) étant conjointement pincé entre les faces transversales de la pièces d'extrémité (24) et de la bague épaisse (22),
- au niveau de la bague d'étanchéité (5), une bague externe (30) comportant une partie sensiblement tubulaire (31) solidarisée à une partie formant rondelle interne (32) perpendiculaire à l'axe longitudinal Z, en sa partie centrale, la partie tubulaire (31) venant se fixer à l'intérieur de l'extrémité du corps cylindrique (2), la partie formant rondelle interne (32) étant pincée entre une coupelle (34) solidarisée à la tige de piston (7), et un écrou (35) qui vient se visser sur un prolongement tubulaire (36) partiellement fileté de ladite coupelle (34), les diamètres externes de la coupelle (34) et de son prolongement tubulaire (36), étant inférieurs d'un jeu prédéterminé aux diamètres internes de la partie sensiblement tubulaire (31) et de la partie formant rondelle interne respectivement, un joint torique (37) étant inséré entre une face transversale de la coupelle (34) et la face correspondante de la partie formant rondelle interne (32) de la bague externe (30).

2. Système de suspension selon la revendication 1, **caractérisé en ce que** les moyens de ménager un jeu angulaire de l'axe de la tige de piston (7) relativement à l'axe de la cavité cylindrique (2) comprennent, au niveau du piston (1), une bague épaisse (22) prenant appui sur la face interne de la cavité cylindrique (2), ladite bague épaisse (22) comportant un alésage central dans lequel vient prendre place une pièce d'extrémité (24) de la tige de piston (7), ladite bague épaisse (22) étant est pincée entre cette la pièce d'extrémité (24) et une rondelle plate (23) maintenue en place par une vis (29),).

3. Fourche de suspension de moto, **caractérisée en ce qu'**elle comporte au moins un système de suspension selon l'une des revendications 1 ou 2.

4. Véhicule, **caractérisé en ce qu'**il comporte au moins un système de suspension suivant l'une quelconque des revendications 1 ou 2.

## Patentansprüche

1. Federungssystem, einen Korpus (15) umfassend, der mit einem zylindrischen Hohlraum (2) versehen ist, in dem ein Kolben (1) entlang einer Längsachse Z gleitend montiert ist, der den zylindrischen Hohlraum in zwei Arbeitskammern unterteilt: eine untere Kammer (10) und eine obere Kammer (11), die jeweils ein Gas aufnehmen, wobei der Kolben (1) mit einer Kolbenstange (7) verbunden ist, die aus dem zylindrischen Hohlraum (2) durch einen Dichtungsring (5) hindurch austritt, wobei das Federungssystem Mittel zum Herbeiführen eines Winkelspiels mit einer vorbestimmten Amplitude der Achse der Kolbenstange (7) im Verhältnis zur Achse des zylindrischen Hohlraums (2) aufweist, wobei die Mittel umfassen:
- im Bereich des Kolbens (1) einen dickwandigen Ring (22), der sich an die Innenseite des zylindrischen Hohlraums (2) anlegt und eine Durchgangsbohrung aufweist, in der ein Endstück (24) platziert ist, das am Abschluss der Kolbenstange (7) fixiert ist, wobei ein seitliches Spiel mit einer vorbestimmten Amplitude zwischen dem Innendurchmesser des dickwandigen Rings (22) und dem Außendurchmesser des Endstücks (24) herbeigeführt wird, wobei das Federungssystem **dadurch gekennzeichnet ist, dass** die Mittel umfassen:
- einen O-Ring (28), der gemeinsam zwischen den querlaufenden Flächen des Endstücks (24) und des dickwandigen Rings (22) geklemmt ist,
- im Bereich des Dichtungsrings (5) einen äußeren Ring (30), der einen im Wesentlichen röhrenförmigen Abschnitt (31) aufweist, der fest mit einem Abschnitt verbunden ist, der in seinem mittleren Abschnitt eine innere Scheibe (32) senkrecht zur Längsachse Z bildet, wobei der röhrenförmige Abschnitt (31) im Inneren des Endes des zylindrischen Hohlraums (2) fixiert wird, wobei der Abschnitt, der eine innere Scheibe (32) bildet, zwischen einem Teller (34), der fest mit der Kolbenstange (7) verbunden ist, und einer Schraubenmutter (35) geklemmt ist, die auf eine röhrenförmige und teilweise mit einem Gewinde versehene Verlängerung (36) des Tellers (34) geschraubt wird, wobei die Außendurchmesser des Tellers (34) und dessen röhrenförmiger Verlängerung (36) kleiner sind als ein vorbestimmtes Spiel der Innendurchmesser jeweils des im Wesentlichen röhrenförmigen Abschnitts (31) und des Abschnitts, der eine innere Scheibe bildet, wobei ein O-Ring (37) zwischen eine querlaufende Fläche des Tellers (34) und der entsprechenden Fläche des Abschnitts, der eine innere Scheibe (32) bildet, des äußeren Ringes (30), eingesetzt ist.

2. Federungssystem nach Anspruch 1, **dadurch gekennzeichnet, dass** die Mittel zum Herbeiführen eines Winkelspiels der Achse der Kolbenstange (7) im Verhältnis zur Achse des zylindrischen Hohlraums (2) im Bereich des Kolbens (1) einen dickwandigen Ring (22) aufweisen, der sich an die Innenseite des zylindrischen Hohlraums (2) anlegt, wobei der dickwandige Ring (22) eine mittlere Bohrung aufweist, in der ein Endstück (24) der Kolbenstange (7) platziert ist, wobei der dickwandige Ring (22) zwischen diesem Endstück (24) und einer flachen Scheibe (23) geklemmt wird, die durch eine Schraube (29) an Ort und Stelle gehalten wird.

3. Federgabel eines Motorrads, **dadurch gekennzeichnet, dass** sie mindestens ein Federungssystem nach einem der Ansprüche 1 oder 2 aufweist.

4. Fahrzeug, **dadurch gekennzeichnet, dass** es mindestens ein Federungssystem nach einem der Ansprüche 1 oder 2 aufweist.

## Claims

1. Suspension system comprising a body (15) provided with a cylindrical cavity (2) in which is slidably mounted, along a longitudinal axis Z, a piston (1) dividing the cylindrical cavity into two working chambers: a lower chamber (10) and an upper chamber (11) each receiving a gas, the piston (1) being connected to a piston rod (7) emerging from the cylindrical cavity (2) through a sealing ring (5), the suspension system comprising means to arrange an angular clearance of predetermined magnitude of the axis of the piston rod (7) relative to the axis of the cylindrical cavity (2), said means comprising:
- at the piston (1) a thick ring (22) bearing on the inner face of the cylindrical cavity (2) and comprising a through-bore in which takes place an end part (24) fastened to the end of the rod of the piston (7), a lateral clearance of predetermined amplitude being arranged between the inner diameter of the thick ring (22) and the outer diameter of the end part (24), the suspension system being **characterised in that** said means comprise:
- an O-ring (28) being jointly pinched between the transversal faces of the end part (24) and of the thick ring (22),
- at the sealing ring (5), an external ring (30) comprising a substantially tubular portion (31) secured to a portion forming an internal washer (32) perpendicular to the longitudinal axis Z, in the central portion thereof, the tubular portion (31) being fixed inside the end of the cylindrical body (2), the portion forming an internal washer (32) being pinched between a cup (34) secured to the piston rod (7), and a nut (35) that is screwed onto a partially threaded tubular extension (36) of said cup (34), the outer diameters of the cup (34) and of the tubular extension (36) thereof, being less than a predetermined clearance at the inner diameters of the substantially tubular part (31) and of the portion forming an internal washer respectively, an O-ring (37) being inserted between a transversal face of the cup (34) and the corresponding face of the portion forming an internal washer (32) of the external ring (30).

2. Suspension system according to claim 1, **characterised in that** the means for arranging an angular clearance of the axis of the piston rod (7) relative to the axis of the cylindrical cavity (2) comprise, at the piston (1), a thick ring (22) bearing on the internal face of the cylindrical cavity (2), said thick ring (22) comprising a central bore in which takes place an end part (24) of the piston rod (7), said thick ring (22) being pinched between this end part (24) and a flat washer (23) maintained in place by a screw (29).

3. Motorcycle suspension fork, **characterised in that** it comprises at least one suspension system according to one of claims 1 or 2.

4. Vehicle, **characterised in that** it comprises at least one suspension system according to any of claims 1 or 2.
